(19) Europäisches Patentamt

European Patent Office

Office européen des brevets

(11) Veröffentlichungsnummer: **0 293 017 B1**

(12) **EUROPÄISCHE PATENTSCHRIFT**

(45) Veröffentlichungstag der Patentschrift: **12.05.93**

(21) Anmeldenummer: **88110153.9**

(22) Anmeldetag: **04.04.85**

(60) Veröffentlichungsnummer der früheren Anmeldung nach Art. 76 EPÜ: **0 160 845**

(51) Int. Cl.⁵: **H01M 10/34**, H01M 4/26

(54) **Verfahren zur Herstellung eines gasdicht verschlossenen alkalischen Akkumulators.**

(30) Priorität: **07.05.84 DE 3416817**

(43) Veröffentlichungstag der Anmeldung:
**30.11.88 Patentblatt 88/48**

(45) Bekanntmachung des Hinweises auf die Patenterteilung:
**12.05.93 Patentblatt 93/19**

(84) Benannte Vertragsstaaten:
**CH DE FR GB IT LI**

(56) Entgegenhaltungen:
**FR−A− 2 290 049**
**GB−A− 1 088 271**
**GB−A− 2 009 489**
**GB−A− 2 061 605**
**US−A− 2 636 058**

**PATENT ABSTRACTS OF JAPAN**, Band 5, Nr. 153 (E−76)[825], 26. September 1981; & JP−A−56 86 461 (MATSUSHITA DENKI SANGYO K.K.) 14−07−1981

(73) Patentinhaber: **VARTA Batterie Aktiengesell−schaft**
**Am Leineufer 51**
**W−3000 Hannover 21(DE)**

(72) Erfinder: **Knabenbauer, Wolfgang**
**Pappelstrasse 36**
**W−5800 Hagen(DE)**
Erfinder: **Glötzl, Karl**
**Am Rotdorn 29**
**W−2420 Castrop−Rauxel(DE)**
Erfinder: **Sprengel, Dietrich, Dr.**
**Starenweg 9**
**W−5884 Halver(DE)**
Erfinder: **Tepel, Rudolf**
**Moorweg 1a**
**W−3013 Barsinghausen 12(DE)**

(74) Vertreter: **Kaiser, Dieter Ralf, Dipl.−Ing.**
**Gundelhardtstrasse 72**
**W−6233 Kelkheim/Ts. (DE)**

EP 0 293 017 B1

**Beschreibung**

Die Erfindung betrifft ein Verfahren zur Herstellung eines gasdicht verschlossenen alkalischen Akkumulators, dessen negative Überschußkapazität durch eine Vorbehandlung der Elektroden außerhalb der Zelle in Ladereserve und Entladereserve aufgeteilt ist.

In einer gasdicht arbeitenden Zelle müssen die Kapazitäten der positiven und negativen Elektroden so ausgelegt werden, daß sowohl die geforderte Nennkapazität der Zelle als auch die Funktionsweise bei Überladung und Hochstrombelastung gewährleistet ist.

Zur Absicherung dieser Forderung werden die über die Elektrodengrößen eingebrachten Kapazitäten so ausgelegt, daß sie zum Beispiel im Verhältnis

$$(+):(-) = 1 : 1,5$$

zueinander stehen. Dieses Verhältnis hängt von Fall zu Fall von den speziellen Ansprüchen an die Zelle, z.B. besondere Überladesicherheit, ab. Außerdem muß der im Laufe des Betriebes nicht vermeidbare Kapazitätsabfall der negativen Elektroden kompensiert werden.

Es ist eine Reihe von derartigen Verfahren bekannt. Bei der Mehrzahl von ihnen wird die negative Elektrode einer Vorladung gegenüber der positiven Elektrode unterzogen, deren Umfang der gewünschten Entladereserve entspricht. Für die Vorladung sind z.B. chemische Reduktionsmittel geeignet. So wird nach DE−A 28 51 463 der mit teilweise entladenen Elektroden bestückten Zelle ein Elektrolyt mit Zusätzen an Methanol, Äthanol oder Propanol zugesetzt. Gemäß den US−A 3 288 643 und US−A 3 297 433 sind die reduzierenden Agenzien Aluminium− oder Zinkpulver, welche der ungeladenen negativen Aktivmasse untermischt werden, ihre gezielte Wirkung auf die negative Elektrode aber, nämlich Reduktion einer bestimmten Menge $Cd(OH)_2$ zu $Cd_{met}$, ebenso wie die genannten Alkohole erst in der elektrolytgefüllten und verschlossenen Zelle entfalten.

Andere bekannte Verfahren bringen die negative Überschußkapazität auf dem Umwege einer speziellen Vorbehandlung der positiven Elektrode ein. So sieht die DE−A 30 26 073 vor, einen Teil der ungeladenen positiven Elektrodenmasse vor dem Zusammenbau mit einer vollständig entladenen Negativen in heißer KOH elektrochemisch bis zum Ni−Metall zu reduzieren. Bei der Ladung der nunmehr verschlossenen Zelle wird die elektrochemische Reduktion rückgängig gemacht und in der negativen Elektrode eine dem oxidierten Ni äquivalente Menge geladenes Cadmium gebildet. Da der Übergang Ni → $Ni^{2+}$ an den die Bildung dieses $Cd_{met}$ gekoppelt ist, im späteren Zellenbetrieb keine Umkehrung erfährt, also irreversibel ist, bleibt der hieraus erwachsene Cd−Anteil in der negativen Elektrode nach jeder erschöpfenden Entladung der Zelle als Entladereserve erhalten. Eine ebenfalls irreversible Erzeugung von Entladereserve gelingt nach DE−C 21 56 554 dadurch, daß die antipolare Masse der ungeladenen positiven Elektrode vor dem Einbau mit metallischem Zink versetzt wird, welches nach Einbau und Zusatz des Elektrolyten einen Teil der antipolaren Masse reduziert und daß bei anschliessender Ladung eine dem reduzierten Teil der antipolaren Masse entsprechende Entladereserve der negativen Elektrode gebildet wird.

Ferner gibt es Verfahren, z.B. gemäß FR−A 21 15 704, bei denen die Einstellung der Zellenbalance entsprechend dem gewünschten Auslegungsverhältnis der Elektroden durch Ladung und Überladung in der noch offenen Zelle und in der Kälte herbeigeführt wird. Die Schaffung von Entladereserve durch Teilreduk− tion von $Cd(OH)_2$−Elektroden in stark reduzierenden chemischen Bädern (DE−A 29 43 101) oder durch thermische Zersetzung von in negative Sinterelektroden eingetränktem Cadmiumformiat (DE−A 25 07 988) ist auch möglich.

Bei einigen der genannten Verfahren ist das angestrebte Kapazitätsverhältnis erst nach erfolgter Inbetriebsetzungsladung endgültig ausbalanciert. Die Verwendung von chemischen Substanzen zur Oxidation oder Reduktion der Elektroden gibt Probleme auf, weil die Reaktionsprodukte nicht leicht aus den Zellen entfernbar sind und dadurch die Zellencharakteristik bei der elektrischen Belastung nachteilig beeinflussen. Dem beispielsweisen Fall, daß eine durch Behandlung mit einem chemischen Oxidationsmittel teilentladene negative Elektrode erst nach Waschung und Konservierung zusammen mit einer geladenen positiven Elektrode eingebaut wird, offenbart die JP−A 57−151 177.

Bei einer elektrochemischen Einstellung der Zellenbalance in der offenen Zelle sind die mit den Ladungsgasen austretenden Laugenebel äußerst störend. Darüber hinaus hat ein solches Verfahren den Nachteil, daß der Fertigungsablauf aufgrund der zeitlich recht unterschiedlich langen Prozeßschritte nur ungenügend automatisierbar ist.

Schließlich ist in der GB−A−1 088 271 ein gasdichter alkalischer Akkumulator offenbart, dessen positive und dessen negative Elektrode im einbaufertigen Zustand ungeladen sind, wobei jedoch die negative Elektrode dadurch über einen Ladungsüberschuß als Entladereserve verfügt, daß sie mit einer ausgeladenem Cadmium bestehenden Hilfselektrode kurzgeschlossen ist.

Der Erfindung liegt daher die Aufgabe zugrunde, Maßnahmen einer Elektrodenbehandlung bis zum gemeinsamen Einbau anzugeben, die zum Ergebnis haben, daß die Zelle nach dem Verschluß hinsichtlich einer negativen Lade − und Entladereserve fertig ausbalanciert ist und insbesondere keiner offenen Formation bedarf.

Die Aufgabe wird erfindungsgemäß gelöst durch ein Verfahren zur Herstellung eines gasdicht ver − schlosenen alkalischen Akkumulators, wie es im Patentanspruch 1 definiert ist.

Nach dem Sinter − Imprägnierverfahren hergestellte negative Cadmium − Elektroden oxidieren, wenn sie teil − oder vollgeladen, danach alkalifrei gewaschen und getrocknet werden, bereits nach kurzer Zeit unter beträchtlicher Wärmeentwicklung. Sie erweisen sich mithin an der Luft als nicht lagerfähig.

Ein erfolgreicher Weg, die negative Elektrode vor dem Zusammenbau mit einer hinreichenden Entla − dereserve auszustatten, ist die teilweise Ladung in Verbindung mit einer Konservierung. Die z.B. 15 Minuten mit einem Strom I = 1 CA angeladenen Elektroden werden alkalifrei gewaschen und nunmehr erfindungs − gemäß kurze Zeit (vorzugsweise 5 sec.) mit einer verdünnten, 20 bis 80 g $H_2SO_4$/l, vorzugsweise 50 g $H_2SO_4$/l, enthaltenden Schwefelsäure oder einem Gemisch dieser Schwefelsäure mit Cadmiumsulfat in Mengen von 5 bis 50 g/l, vorzugsweise 20 g/l behandelt und anschließend bei 100°C getrocknet; dann sind sie ohne zu oxidieren lagerfähig.

Diese in Höhe der vorgegebenen Entladereserve teilgeladenen negativen Cadmium − Elektroden lassen sich darauf erfindungsgemäß mit entladenen positiven $Ni(OH)_2$ − Elektroden gemeinsam in Zellen einbauen, wobei man vorteilhaft positive Elektroden verwendet, welche vorformiert sind. Nach dem Dotieren mit Elektrolyt werden die Zellen gasdicht verschlossen und sind nach einer Ladung (z.B. 24 h mit I = 0,33 CA) gebrauchsfertig.

Beispiele

Die Verfahren nach den Ansprüchen 1 bis 5 werden durch zwei Versuchsreihen, hier unter Verwendung von Zellen mit einer NK = 1,2 Ah, zu dem bekannten Verfahren der offenen Formation in Vergleich gesetzt. Tabelle 2 gibt elektrische Daten.

## Tabelle 2:

Reihe (1) offene Inbetriebsetzung

Reihe (2) nach dem erfindungsgemäßen Verfahren vorbehandelt

| | | |
|---|---|---|
| Ladespannung nach | (1) x | = 1,50 V |
| Lad. 24 h I ≙ 0,33 CA | (2) x | = 1,46 V |
| | | |
| Kap. bei Belastung mit | (1) x | = 110 % NK |
| I ≙ 1 CA (0,95 V) | (2) x | = 116 % NK |
| | | |
| Kap. bei Belastung mit | (1) x | = 85 % NK |
| I ≙ 5 CA (0,85 V) | (2) x | = 106 % NK |

Mit Hilfe der erfindungsgemäßen Verfahren kann somit der positiven oder negativen Elektrode eines alkalischen Akkumulators, insbesondere eines alkalischen Nickel − Cadmium − Akkumulators, eine entspre − chende Nutzkapazität bzw. eine Lade − oder Entladereserve mitgegeben werden, die eine Inbetriebsetzung an der noch nicht verschlossenen Zelle hinfällig macht und die Nachteile eines chemischen oder elektro − chemischen Ladeverfahrens vermeidet.

3

EP 0 293 017 B1

**Patentansprüche**

**1.** Verfahren zur Herstellung eines gasdicht verschlossenen alkalischen Akkumulators mit einer negativen Cadmiumelektrode, die gemeinsam mit einer ungeladenen positiven Elektrode in die Zelle eingebaut wird und eine Überschußkapazität besitzt und die außerhalb der Zelle mit einer Entladereserve versehen wird, dadurch gekennzeichnet, daß die entladene Cadmiumelektrode vor dem Einbau im Umfang der vorgegebenen Entladereserve teilgeladen wird, daß die Elektrode alkalifrei gewaschen wird und daß sie mit einer schwefelsauren Lösung behandelt und danach getrocknet wird.

**2.** Verfahren nach Anspruch 1, dadurch gekennzeichnet, daß die negative Elektrode eine Sinterelektrode ist.

**3.** Verfahren nach Anspruch 2, dadurch gekennzeichnet, daß die negative Sinterelektrode mit einem Strom I $\triangleq$ 1 CA bis zur geforderten Entladereserve angeladen wird und daß die zu ihrer Nachbehandlung verwendete schwefelsaure Lösung von 20 bis 80 g $H_2SO_4$/l, vorzugsweise 50 g $H_2SO_4$/l enthält.

**4.** Verfahren nach Anspruch 3, dadurch gekennzeichnet, daß die schwefelsaure Lösung zusätzlich Cadmiumsulfat enthält.

**5.** Verfahren nach Anspruch 4, dadurch gekennzeichnet, daß Schwefelsäure und Cadmiumsulfat in Konzentrationen zwischen 20 und 80 g $H_2SO_4$/l, vorzugsweise ca. 50 g $H_2SO_4$/l und zwischen 5 und 50 g $CdSO_4$/l, vorzugsweise ca. 20 g $CdSO_4$/l vorliegen.

**Claims**

**1.** Process for manufacturing an alkali accumulator which is closed off in gas-tight manner and has a negative cadmium electrode which, together with an uncharged positive electrode, is installed in the cell and has an excess capacitance and is provided outside the cell with a discharge reserve, characterized in that the discharged cadmium electrode is partially charged before installation within the predetermined discharge reserve, in that the electrode is washed free of alkali, and in that it is treated with a sulphuric acid solution and then dried.

**2.** Process according to Claim 1, characterized in that the negative electrode is a sintered electrode.

**3.** Process according to Claim 2, characterized in that the negative sintered electrode is initially charged with a current I $\triangleq$ ICA to the required discharge reserve, and in that the sulphuric acid solution used for its after-treatment contains from 20 to 80 g of $H_2SO_4$/l, preferably 50 g of $H_2SO_4$/l.

**4.** Process according to Claim 3, characterized in that the sulphuric acid solution in addition contains cadmium sulphate.

**5.** Process according to Claim 4, characterized in that sulphuric acid and cadmium sulphate are provided in concentrations of between 20 and 80 g of $H_2SO_4$/l, preferably approximately 50 g of $H_2SO_4$/l and between 5 and 50 g of $CdSO_4$/l, preferably approximately 20 g of $CdSO_4$/l.

**Revendications**

**1.** Procédé pour la fabrication d'un accumulateur alcalin fermé étanche au gaz avec une électrode négative en cadmium qui est montée dans l'élément conjointement avec une électrode positive non chargée et qui possède une capacité de réserve et est munie hors de l'élément d'une réserve de décharge, procédé caractérisé en ce que l'électrode de cadmium déchargée est chargée partiellement avant le montage au niveau de la réserve de décharge prédéfinie, en ce que cette électrode est lavée pour la débarrasser de l'alcali et en ce qu'elle est traitée avec une solution d'acide sulfurique et ensuite séchée.

**2.** Procédé selon la revendication 1, caractérisé en ce que l'électrode négative est une électrode frittée.

4

3. Procédé selon la revendication 2, caractérisé en ce que l'électrode négative frittée est chargée avec un courant I $\doteq$ 1 CA jusqu'à la réserve de décharge exigée, et en ce que la solution d'acide sulfurique utilisée pour son traitement ultérieur contient de 20 à 80 grammes de $H_2SO_4$ par litre, de préférence 50 grammes de $H_2SO_4$ par litre.

4. Procédé selon la revendication 3, caractérisé en ce que la solution d'acide sulfurique contient en outre, du sulfate de cadmium.

5. Procédé selon la revendication 4, caractérisé en ce que les concentrations en oxyde sulfurique et en sulfate de cadmium se situent entre 20 et 80 grammes de $H_2SO_4$ par litre, de préférence à environ 50 grammes de $H_2SO_4$ par litre et entre 5 et 50 grammes de $CdSO_4$ par litre, de préférence environ 20 grammes de $CdSO_4$ par litre.